# EUROPEAN PATENT APPLICATION

(11) **EP 4 775 742 A1**
(43) Date of publication of application: **15.07.2026**
(21) Application number: 24862533.7
(22) Date of filing: 09.08.2024
(51) Int. Cl.: E02F 9/00, B60K 15/04

(54) **WORK MACHINE**

(30) Priority: 04.09.2023 JP 2023142886
(71) Applicant: Kubota Corporation, Osaka-shi, Osaka 530-0011 (JP)
(72) Inventor: HORII, Hiroshi, Sakai-shi, Osaka 590-0908 (JP); NISHIGORI, Yoichi, Sakai-shi, Osaka 590-0908 (JP)
(74) Representative: Cabinet Beau de Loménie
(86) International application number: PCT/JP2024/028808
(87) International publication number: WO 2025/052879

(57) **Abstract**

The present disclosure relates to a work machine. A work machine of the present disclosure includes a machine body on which an engine, a fuel tank storing fuel for the engine, and an oil feed pump delivering the fuel to the fuel tank are mounted, the machine body being covered with a cover, in which the machine body includes, on an inner side with respect to the cover, a suction tube a part of which includes a hose, the suction tube having one end portion connected to a suction aperture of the oil feed pump, and a holder holding the other end portion of the suction tube in an orientation in which an end of the other end portion faces upward. The holder includes a cap portion having an opening on a lower side and an upper side being closed by a lid portion. An oil feed tube is held by the holder in a state in which the other end portion is inserted into the cap portion from the opening.

## Description

### TECHNICAL FIELD

The present invention relates to a work machine, such as a backhoe. The present application claims priority based on Japanese Patent Application No. 2023-142886 filed on September 4, 2023, the entire contents of which are incorporated herein by reference.

### BACKGROUND ART

A work machine disclosed in PATENT LITERATURE 1 has conventionally been known. The work machine disclosed in PATENT LITERATURE 1 is a backhoe, and includes a slewing base, a prime mover mounted on the slewing base, a fuel tank storing fuel to be supplied to the prime mover, and an oil feed pump and an oil feed tube used for replenishing fuel to the fuel tank. The oil feed tube includes an oil feed hose having one end connected to a suction side of the oil feed pump, and a nozzle (suction portion) provided to the other end of the oil feed hose. The oil feed tube is housed in the inside (side compartment) of a machine body covered with a cover. The work machine includes a holder that, when the oil feed tube (oil feed hose and nozzle) is housed inside the machine body, holds the other end portion (nozzle) of the oil feed tube.

### CITATION LIST

### [PATENT LITERATURE]

PATENT LITERATURE 1: Japanese Laid-Open Patent Publication No. 2010-084329

### SUMMARY OF THE INVENTION

A work machine according to one aspect of the present disclosure includes a machine body on which a prime mover, a tank that stores fuel for the prime mover, and a pump that delivers the fuel to the tank are mounted, the machine body being covered with a cover, in which the machine body includes, on an inner side with respect to the cover, an oil feed tube a part of which includes a hose, the oil feed tube having one end portion connected to a suction aperture of the pump, and a holder that holds an other end portion of the oil feed tube in an orientation in which an end of the other end portion faces upward, the holder includes a cap portion having an opening on a lower side and an upper side being closed, and the oil feed tube is held by the holder in a state in which the other end portion is inserted into the cap portion from the opening.

With the present disclosure, it is possible to inhibit inflow of water and the like into the fuel tank from the oil feed tube, in the work machine including the machine body with the fuel tank and the oil feed tube for replenishing the fuel to the fuel tank included.

### BRIEF DESCRIPTION OF DRAWINGS

[FIG. 1] FIG. 1 is a perspective view schematically illustrating a work machine according to one embodiment of the present disclosure.
[FIG. 2] FIG. 2 is a right side view schematically illustrating the work machine according to the one embodiment of the present disclosure.
[FIG. 3] FIG. 3 is a perspective view illustrating a machine body.
[FIG. 4] FIG. 4 is a perspective view illustrating the inside (area around fuel tank) of the machine body.
[FIG. 5] FIG. 5 is a perspective view illustrating an area around the fuel tank and an oil feed pump.
[FIG. 6] FIG. 6 is a perspective view illustrating the fuel tank, an oil feed tube, the oil feed pump, and a holder.
[FIG. 7] FIG. 7 is a front view illustrating the fuel tank, the oil feed tube, the oil feed pump, and the holder.
[FIG. 8] FIG. 8 is a perspective view illustrating the holder.
[FIG. 9] FIG. 9 is a partial side view illustrating an inserted condition of the oil feed tube into the holder.
[FIG. 10] FIG. 10 is a perspective view illustrating a held condition of the oil feed tube by the holder and an operating condition of a lock mechanism.

### DETAILED DESCRIPTION

### <Technical problem>

In the conventional work machine, the holder holds the other end portion (nozzle) of the oil feed tube with the end side facing downward. With the holder having such a configuration, rainwater, dust, and the like (referred to as water and the like hereunder) that have entered the machine body accumulate inside in some cases, and there is a possibility that the accumulating water and the like may flow into the fuel tank through the oil feed tube (oil feed hose and nozzle).

An object of the present disclosure is, in a work machine including a machine body with a fuel tank and an oil feed tube for replenishing fuel to the fuel tank included, to inhibit an inflow of water and the like into the fuel tank from the oil feed tube.

### <Advantageous effects of the invention>

According to the work machine of the present disclosure, it is possible to inhibit the inflow of the water and the like into the fuel tank from the oil feed tube, in the work machine including the machine body with the fuel tank and the oil feed tube for replenishing fuel to the fuel tank included.

### <Outline of embodiments of present disclosure>

Hereunder, an outline of embodiments of the invention of the present disclosure will be listed and described.
(1) A work machine of the present disclosure includes a machine body on which a prime mover, a tank that stores fuel for the prime mover, and a pump that delivers the fuel to the tank are mounted, the machine body being covered with a cover, in which the machine body includes, on an inner side with respect to the cover, an oil feed tube a part of which includes a hose, the oil feed tube having one end portion connected to a suction aperture of the pump, and a holder that holds an other end portion of the oil feed tube in an orientation in which an end of the other end portion faces upward, the holder includes a cap portion having an opening on a lower side and an upper side being closed, and the oil feed tube is held by the holder in a state in which the other end portion is inserted into the cap portion from the opening.
   With the work machine having the above configuration, the cap portion into which the other end portion of the oil feed tube is inserted is disposed in an orientation in which one side in an axial direction of the cap portion faces downward. Thus, the water and the like that have entered the machine body does not accumulate inside the cap portion. Thus, according to the work machine having the above configuration, in the configuration in which the fuel tank and the oil feed tube for replenishing the fuel to the fuel tank are included in the machine body, it is possible to inhibit the inflow of the water and the like into the fuel tank from the oil feed tube.
(2) It is preferable that, in the work machine according to the mode (1), the oil feed tube include a nozzle that constitutes the other end portion, and the holder hold the nozzle. With the work machine having the above configuration, in the configuration in which the oil feed tube includes the nozzle, it is possible to inhibit the inflow of the water and the like into the fuel tank from the oil feed tube.
(3) It is preferable that, in the work machine according to the mode (2), the holder hold the nozzle in a state in which a suction hole for the fuel with which the nozzle is provided is located higher than a liquid level of the fuel in the tank when the tank is fed with fuel up to a maximum capacity. According to the work machine having such a configuration, it is possible to prevent the fuel in the fuel tank from flowing out through the oil feed tube.
(4) It is preferable that, in the work machine according to the mode (2) or (3), the holder further include a locking portion that locks the nozzle, and the locking portion be configured to be displaceable between a first position at which the nozzle in a state of being inserted into the cap portion is locked, and a second position at which the nozzle in the state of being inserted into the cap portion is unlocked. According to the work machine having such a configuration, it is possible to facilitate the insertion of the oil feed tube into the cap portion, and reliably hold the inserted oil feed tube by the locking portion.
(5) It is preferable that, in the work machine according to the mode (4), the holder further include a lock mechanism that restricts a displacement of the locking portion located at the first position to the second position. According to the work machine having such a configuration, it is possible to reliably hold the oil feed tube inserted into the cap portion by the locking portion.
(6) It is preferable that, in the work machine according to any one of the modes (1) to (5), the holder be detachably attached to the machine body, or be attached to a member detachably attached to the machine body. The work machine having such a configuration can easily achieve a configuration capable of removing the holder.
(7) It is preferable that, in the work machine according to any one of the modes (1) to (6), the machine body further include, on the inner side with respect to the cover, an oil feed tube holding portion that holds, below the holder, an intermediate portion in a length direction of the oil feed tube. According to the work machine having such a configuration, it is possible to prevent the fuel in the fuel tank from flowing out through the oil feed tube.
(8) It is preferable that, in the work machine according to any one of the modes (1) to (7), the oil feed tube holding portion hold the oil feed tube that is spirally wound. According to the work machine having such a configuration, it is possible to house the oil feed tube in the machine body with the use of a space between the fuel tank and the cover.
(9) It is preferable that, in the work machine according to any one of the modes (1) to (8), the cap portion have an opening on a lower side, and have a cylindrical shape with a side surface and an upper side being closed. According to the work machine having such a configuration, it is possible to inhibit the inflow of the water and the like into the fuel tank from the nozzle through the oil feed tube.

### <Details of embodiments of invention of present disclosure>

Hereunder, details of embodiments of the present disclosure will be described with reference to the drawings. Note that at least some of the embodiments described below may be freely combined.

### [Overall configuration of work machine]

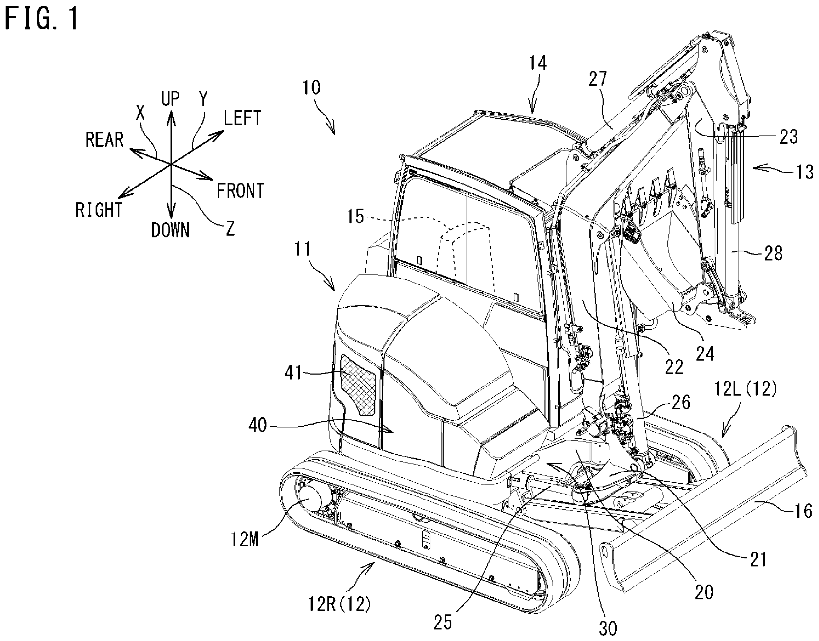

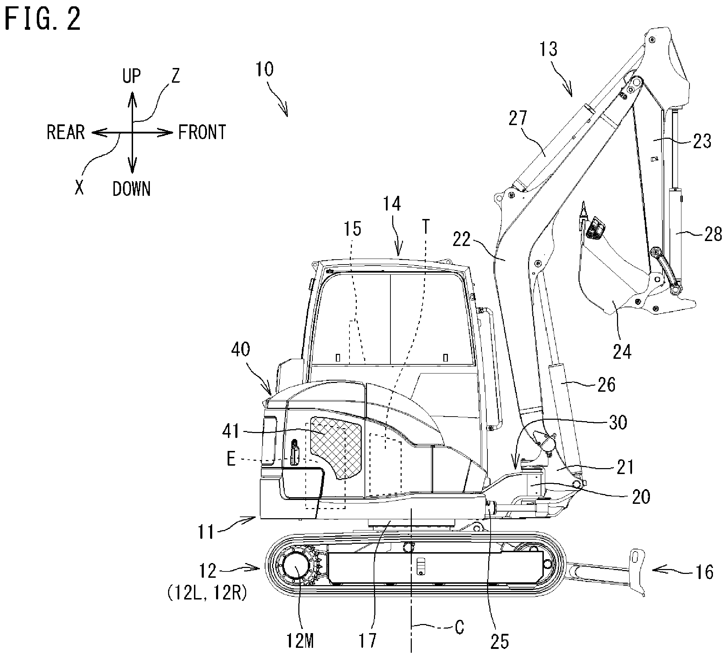

FIG. 1 is a perspective view schematically illustrating a work machine 10 according to one embodiment of the present disclosure. FIG. 2 is a right side view schematically illustrating the work machine 10 according to the one embodiment of the present disclosure. FIGS. 1 and 2 illustrate the work machine 10, which is the one embodiment of the work machine of the present disclosure. The work machine 10 exemplified in the present embodiment is a backhoe. As illustrated in FIG. 1, the work machine 10 includes a machine body 11, a traveling device 12, a working device 13, a cabin 14, and an operator's seat 15 disposed in the cabin 14. The work machine 10 may have a configuration including a canopy in place of the cabin 14.

In the following description, with respect to the operator seated on the operator's seat 15, a direction toward the front side of the operator is referred to as the front of the work machine 10, and a direction toward the rear side is referred to as the rear thereof. The front-rear direction of the work machine 10 is indicated by an arrow X. Further, in the following description, a direction toward the left side of the operator seated on the operator's seat 15 is referred to as the left of the work machine 10, and a direction toward the right side is referred to as the right of the work machine 10. The left-right direction of the work machine 10 is indicated by an arrow Y. The left-right direction of the work machine 10 is also referred to as a width direction. Furthermore, in the following description, an up-down direction of the work machine 10 is indicated by an arrow Z. The up-down direction of the work machine 10 is orthogonal to the front-rear direction and the left-right direction.

As illustrated in FIGS. 1 and 2, the traveling device 12 is a crawler-type traveling device that supports the machine body 11 in a travelable manner. The traveling device 12 includes a first traveling device 12L provided on the left side of the machine body 11, and a second traveling device 12R provided on the right side. The first traveling device 12L and the second traveling device 12R are driven by a hydraulic motor 12M. In the present embodiment, the crawler-type traveling device 12 is used; however, the configuration of the traveling device in the work machine of the present disclosure is not limited thereto, and a traveling device of a wheel-type or the like may be used. The work machine 10 further includes a dozer device 16. The dozer device 16 is provided in front of the traveling device 12. The dozer device 16 may be provided on the front and rear portions of the work machine 10, or may be omitted.

As illustrated in FIG. 2, the machine body 11 is provided on the traveling device 12 with a slewing bearing 17 interposed therebetween. The slewing bearing 17 supports the machine body 11 on the traveling device 12. The machine body 11 is configured to be turnable about a slewing axis C that the slewing bearing 17 has.

As illustrated in FIGS. 1 and 2, the work machine 10 includes, in front of the machine body 11, a support bracket 20 and a swing bracket 21 that support the working device 13. The support bracket 20 is a part of a slewing frame 30, and is provided to protrude forward of the machine body 11. The support bracket 20 includes a through-hole extending in the up-down direction, and a vertical shaft member inserted into the through-hole. The swing bracket 21 is supported by the vertical shaft member of the support bracket 20, and is configured to be swingable around the vertical shaft member. The swing bracket 21 swings as a swing cylinder 25 expands and contracts. The swing bracket 21 includes a first horizontal shaft member extending in a direction orthogonal to the up-down direction.

The working device 13 includes a boom 22, an arm 23, and a bucket 24. A base portion of the boom 22 is supported by the first horizontal shaft member of the swing bracket 21, and is configured to be pivotable around the first horizontal shaft member. The boom 22 swings as a boom cylinder 26 extends and contracts. The boom 22 includes, on its end side, a second horizontal shaft member extending in a direction orthogonal to the up-down direction. The arm 23 is supported by the second horizontal shaft member of the boom 22, and is configured to be pivotable around the second horizontal shaft member. The arm 23 swings as an arm cylinder 27 extends and contracts. The arm 23 includes, on its end side, a third horizontal shaft member extending in a direction orthogonal to the up-down direction. The bucket 24 is supported by the third horizontal shaft member of the arm 23, and is configured to be pivotable around the third horizontal shaft member. The bucket 24 swings as a bucket cylinder 28 extends and contracts. The swing cylinder 25, the boom cylinder 26, the arm cylinder 27, and the bucket cylinder 28 are configured with hydraulic cylinders (hydraulic actuators). Note that the work machine 10 may have a configuration capable of attaching another working tool (hydraulic attachment) in place of the bucket 24.

### [Machine body]

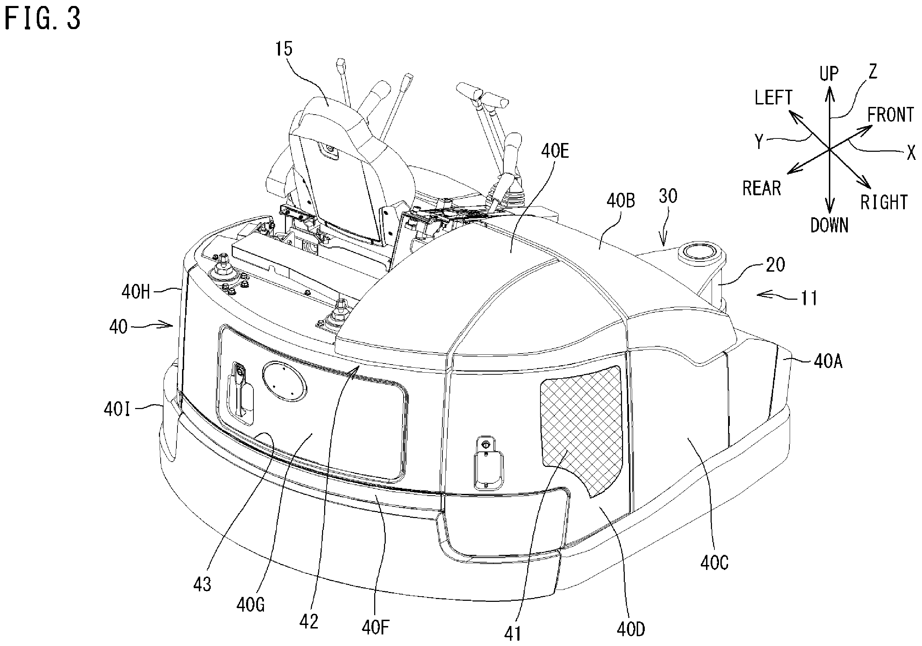

FIG. 3 is a perspective view illustrating the machine body 11. As illustrated in FIGS. 1 to 3, the machine body 11 includes an engine (prime mover) E and a fuel tank T, and the slewing frame 30 and a cover 40. The slewing frame 30 and the cover 40 constitute an outer shell of the machine body 11. The machine body 11 has the engine E and the fuel tank T, and other various devices mounted inside the outer shell constituted by the slewing frame 30 and the cover 40.

The engine E is a driving source that drives each part of the work machine 10. The engine E of the present embodiment is a diesel engine. The engine E may be a gasoline engine. In the present embodiment, the engine (internal combustion engine) is exemplified as the prime mover; however, a hybrid engine including an engine and an electric motor may be used.

The fuel tank T stores fuel (light oil) of the engine E. The fuel tank T is disposed in front of the engine E.

While detailed description is omitted in the present description, the machine body 11 further includes various devices, such as a cooling fan, a radiator, an oil cooler, a fuel cooler, a slewing motor, a battery, a hydraulic pump, an exhaust gas purification device, an air cleaner, a hydraulic fluid tank, and a control valve, which are not illustrated. The radiator is a cooler that cools a coolant of the engine E. The oil cooler is a cooler that cools hydraulic fluid returning from the hydraulic actuators, such as the hydraulic cylinders and the hydraulic motor. The fuel cooler is a cooler that cools the fuel. These coolers are cooled by cooling air generated by the cooling fan. The slewing motor is a driving source that drives the machine body 11 around the slewing axis C. The battery supplies electric power to electrical components mounted on the work machine 10. The hydraulic pump is driven by power of the engine E, and discharges hydraulic fluid for driving the hydraulic motor, the hydraulic cylinders, and the like, and hydraulic oil for signals, for pilot pressure for operating hydraulic valves, and the like. The exhaust gas purification device is a device (DPF) that purifies exhaust gas emitted from the engine E. The air cleaner is a device that purifies air supplied to the engine E. The hydraulic fluid tank is a tank that stores hydraulic fluid. The hydraulic fluid is delivered to the hydraulic pump from the hydraulic fluid tank. The control valve controls the flow rate of the hydraulic fluid supplied to the hydraulic actuators from the hydraulic pump.

### [Cover]

As illustrated in FIGS. 1 to 3, the cover 40 constitutes the outer shell of the machine body 11 together with the slewing frame 30. The cover 40 covers the front, rear, left, and right side surfaces and the upper surface of the machine body 11. The cover 40 includes a plurality of covers. The cover 40 of the present embodiment includes a total of nine covers (first cover 40A to ninth cover 40I).

The first cover 40A is disposed at a right-front portion of the machine body 11. The second cover 40B extends upward and rearward from an upper portion of the first cover 40A, and covers the area above the fuel tank T. The second cover 40B is configured to be openable and closeable, and is used for refueling the fuel tank T and for inspection and maintenance of the fuel tank T and the like. The third cover 40C covers the area on the right side of the fuel tank T. The third cover 40C is configured to be openable and closeable, and is used for inspection and maintenance of the fuel tank T. The fourth cover 40D is disposed at a right-rear portion of the machine body 11. The fourth cover 40D has an outside air introduction portion 41 formed for taking outside air into the fourth cover 40D. Air (cooling air) sucked by the cooling fan is introduced from the outside air introduction portion 41. The fifth cover 40E covers the area on the right side of the engine E and the area above the cooling fan. The sixth cover 40F and the seventh cover 40G cover the area at the back of the engine E. The sixth cover 40F is disposed on an opening 43 formed in the seventh cover 40G. The seventh cover 40G is supported on the sixth cover 40F via a hinge (not illustrated). The seventh cover 40G opens and closes the opening 43. The eighth cover 40H is disposed at a left-rear portion of the machine body 11. The ninth cover 40I is disposed below the eighth cover 40H.

### [Fuel tank and oil feed pump]

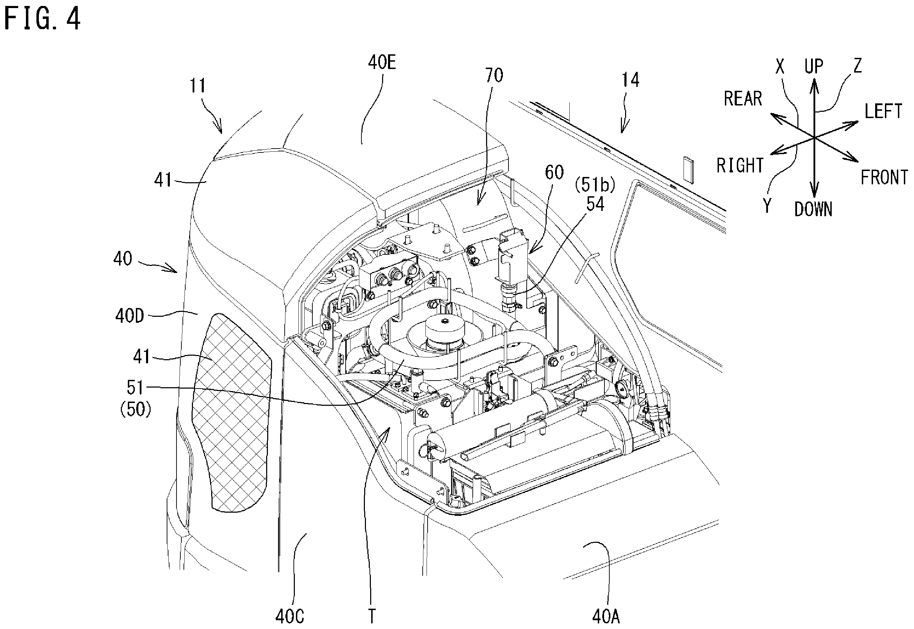

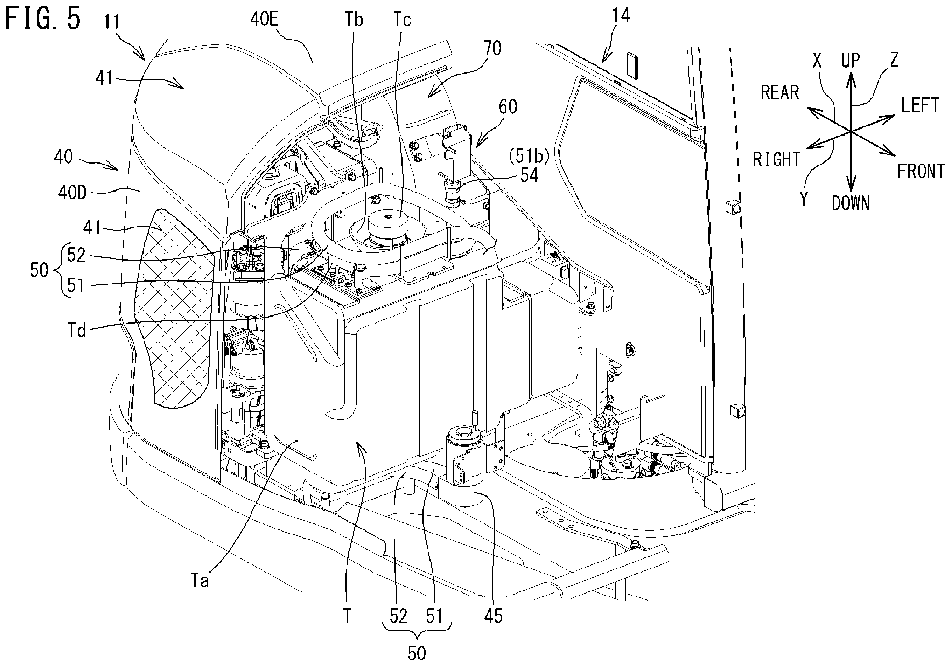

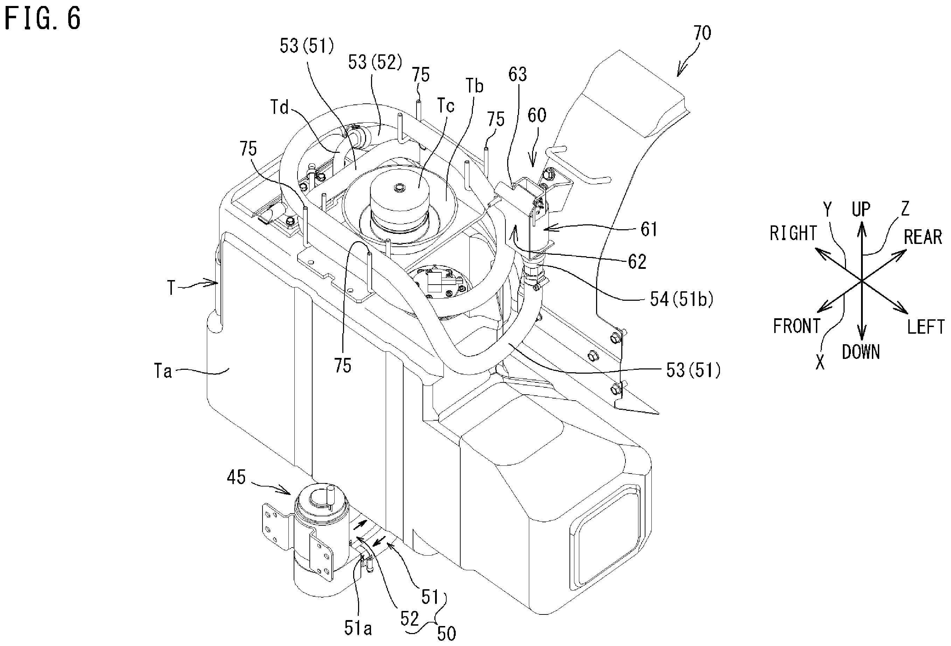

FIG. 4 is a perspective view illustrating the inside (area around the fuel tank T) of the machine body 11. FIG. 5 is a perspective view illustrating an area around the fuel tank T and an oil feed pump 45. FIG. 6 is a perspective view illustrating the fuel tank T, an oil feed tube 50, the oil feed pump 45, and a holder 60. FIG. 4 is a view of the inside of the machine body 11 as viewed obliquely from above with the second cover 40B removed from the machine body 11, and FIG. 5 is a view of the inside of the machine body 11 as viewed obliquely from above, in which the first cover 40A, the second cover 40B, and the third cover 40C are removed from the machine body 11, and devices in front of the fuel tank T are removed. As illustrated in FIGS. 4 to 6, the work machine 10 of the present disclosure includes the fuel tank T and the oil feed pump 45 in the inside of the machine body 11. The fuel tank T is a tank that stores fuel (light oil) of the engine E, and includes a tank body Ta, an oil filling port Tb, a lid Tc, and a fuel injection port Td as illustrated in FIG. 6. The oil feed pump 45 is a pump that pumps fuel to be replenished to the fuel tank T.

### [Oil feed tube]

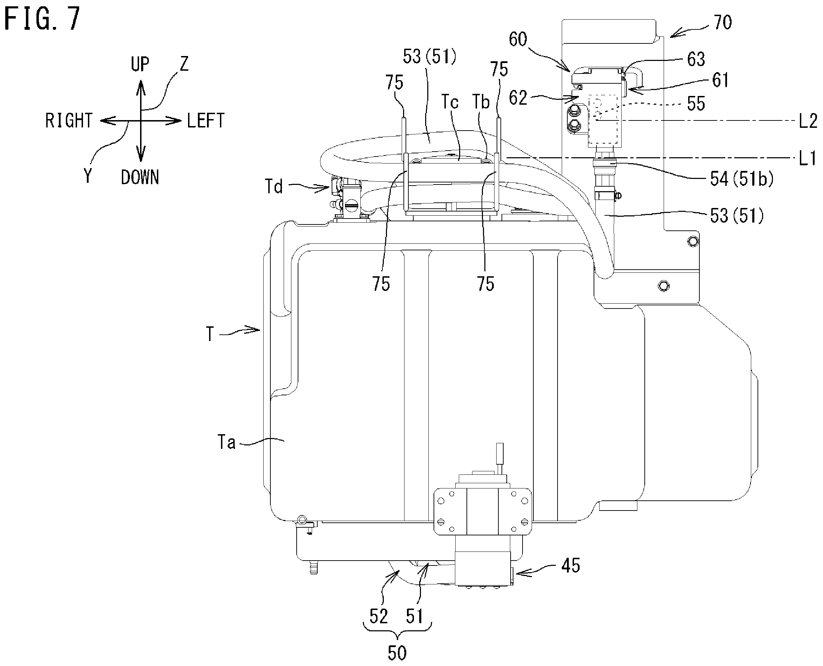

FIG. 7 is a front view illustrating the fuel tank T, the oil feed tube 50, the oil feed pump 45, and the holder 60. As illustrated in FIGS. 4 to 7, the work machine 10 of the present disclosure includes the oil feed tube 50 in the inside of the machine body 11. As illustrated in FIGS. 6 and 7, the oil feed tube 50 includes a suction tube 51 and a discharge tube 52. The oil feed tube 50 constitutes a supply channel for the fuel pumped to the fuel tank T by the oil feed pump 45. One end portion 51a of the suction tube 51 is connected to a suction port of the oil feed pump 45. The suction tube 51 includes a hose 53 and a nozzle 54. The hose 53 constitutes an intermediate portion in the length direction of the oil feed tube 50, and the one end portion 51a. An other end portion 51b of the suction tube 51 is constituted by the nozzle 54. The other end portion 51b (nozzle 54) of the suction tube 51 is inserted into, for example, a drum (not illustrated) storing the fuel for replenishment, and is used as a suction aperture for sucking the fuel in the drum. The discharge tube 52 has one end connected to a discharge port of the oil feed pump 45, and the other end connected to the fuel injection port Td of the fuel tank T. The discharge tube 52 of the present embodiment is configured by a hose 53. When the oil feed pump 45 is operated in the work machine 10, the fuel in the drum is sucked into the suction tube 51 from the other end portion 51b (nozzle 54), pressurized by the oil feed pump 45, and supplied to the fuel tank T through the discharge tube 52 and the fuel injection port Td.

### [Holder]

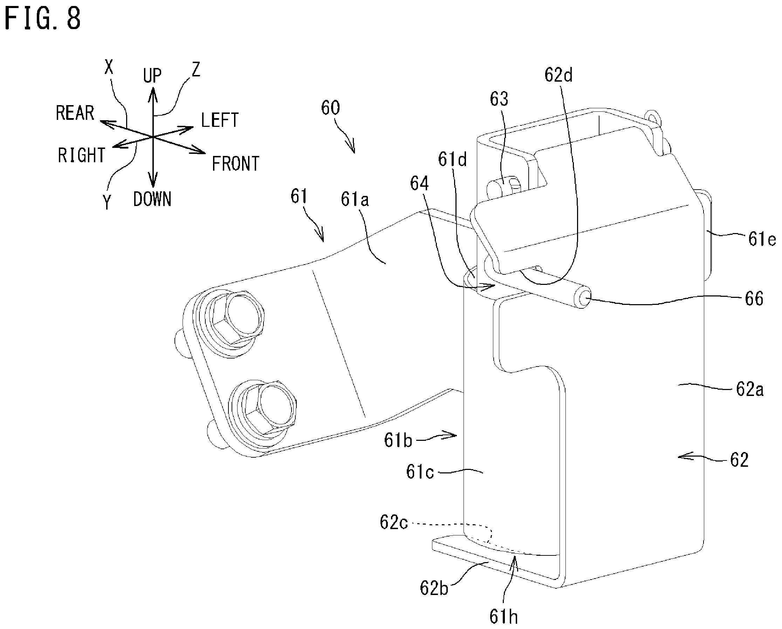

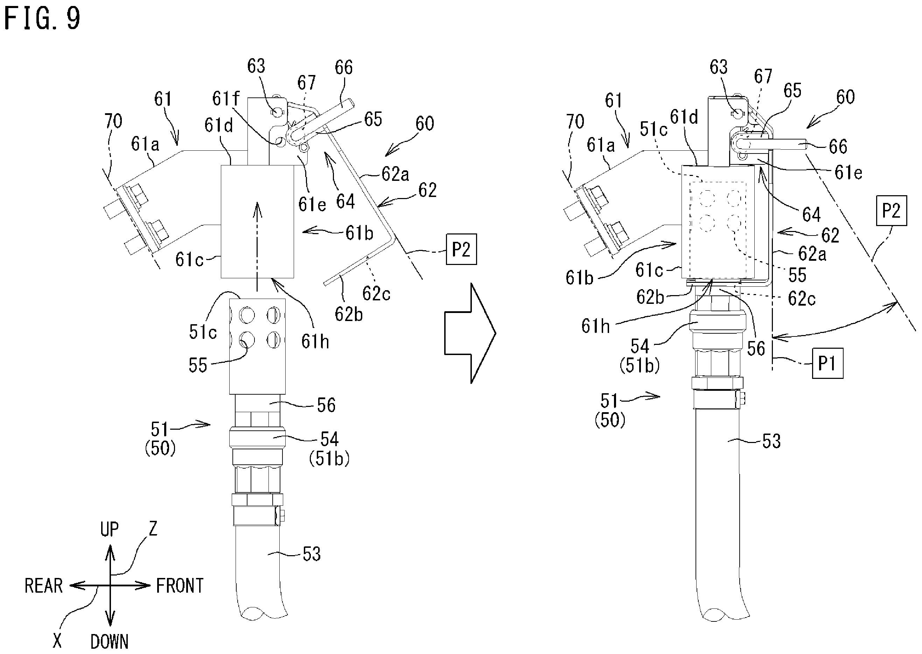

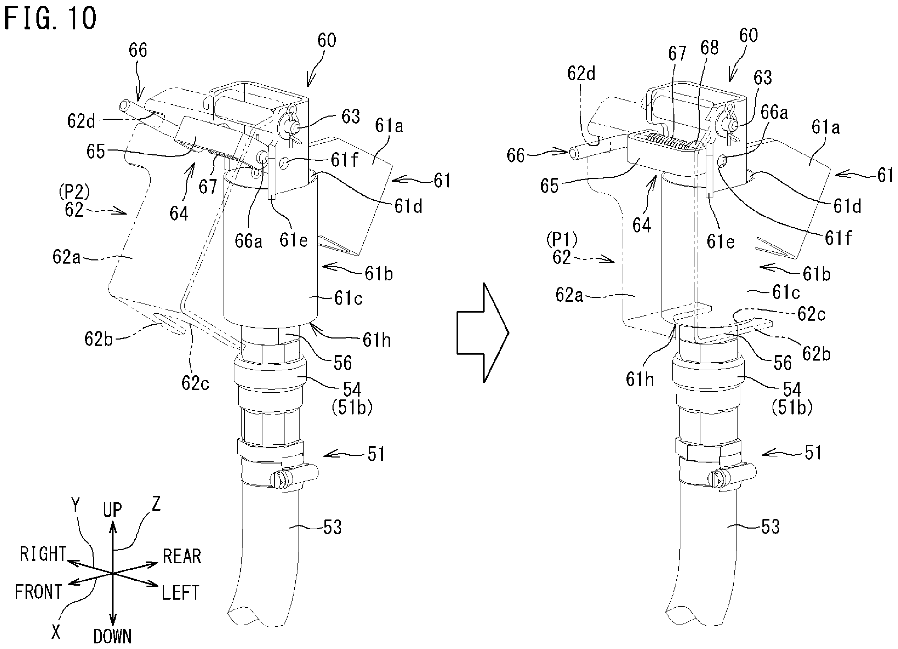

FIG. 8 is a perspective view illustrating the holder 60. FIG. 9 is a partial side view illustrating an inserted condition of the oil feed tube 50 into the holder 60. FIG. 10 is a perspective view illustrating a held condition of the oil feed tube 50 by the holder 60 and an operating condition of a lock mechanism 64. As illustrated in FIGS. 4 and 5, the work machine 10 of the present disclosure further includes the holder 60 in the inside of the machine body 11. The holder 60 holds the other end portion 51b of the suction tube 51 in the oil feed tube 50. The work machine 10 of the present embodiment includes the nozzle 54 at the other end portion 51b of the suction tube 51. Thus, the holder 60 of the present embodiment holds the nozzle 54. The work machine 10 of the present embodiment includes the nozzle 54 at the other end portion 51b of the suction tube 51; however, the nozzle 54 may be omitted. In this case, the holder 60 preferably holds the other end portion 51b (other end of the hose 53) of the suction tube 51.

As illustrated in FIG. 8, the holder 60 includes a first member 61, a second member 62, and a shaft member 63. The shaft member 63 is fixed to the first member 61. The second member 62 is pivotally supported by the shaft member 63 to the first member 61.

The first member 61 includes a body portion 61a and a cap portion 61b. The second member 62 includes an arm portion 62a and a locking portion 62b. The locking portion 62b includes a recessed portion 62c formed into a shape capable of locking the other end portion 51b (nozzle 54) of the suction tube 51. The nozzle 54 includes a small diameter portion 56 that is a portion having an outer diameter smaller than that on an end side (portion having suction holes 55). A surface of the recessed portion 62c facing the small diameter portion 56 is a curved surface having an inner diameter larger than the outer diameter of the small diameter portion 56 and smaller than the outer diameter of a portion of the small diameter portion 56 on the end side in the nozzle 54. Thus, the nozzle 54 is locked by the locking portion 62b by pivoting the second member 62 around the shaft member 63 in a state in which the nozzle 54 is inserted into the cap portion 61b from below such that the end side faces upward, and disposing the recessed portion 62c at a position to sandwich the small diameter portion 56 from opposite sides in a radial direction of the small diameter portion 56.

As illustrated in FIGS. 8 to 10, the first member 61 supports the shaft member 63. The first member 61 pivotally supports the arm portion 62a of the second member 62 via the shaft member 63. The second member 62 is pivoted around the shaft member 63 between a first position P1 and a second position P2. In the present description, of the positions at which the locking portion 62b in the pivoting region of the arm portion 62a can lock the nozzle 54, a position at which a separation distance between the nozzle 54 and the recessed portion 62c is the minimum is referred to as the first position P1; and of the positions at which the locking portion 62b cannot lock the nozzle 54, a position at which the separation distance between the nozzle 54 and the recessed portion 62c is the maximum is referred to as the second position P2. The locking portion 62b is configured to be displaceable between the first position P1 and the second position P2. The locking portion 62b locks the nozzle 54 in the state of being inserted into the cap portion 61b at the first position P1. The locking portion 62b unlocks the nozzle 54 in the state of being inserted into the cap portion 61b at the second position P2.

The first member 61 has the body portion 61a and the cap portion 61b. The cap portion 61b is fixed to the body portion 61a. The body portion 61a has a role of a stay that fixes the holder 60 to the machine body 11. The cap portion 61b is a portion into which the other end portion 51b (nozzle 54) of the suction tube 51 is inserted, and has a role of protecting the other end portion 51b (nozzle 54) from being splashed with rainwater, dust, and the like (water and the like). The cap portion 61b includes a cylindrical portion 61c having a cylindrical form, and a lid portion 61d that seals one end (upper end) of the cylindrical portion 61c in its axial direction. The cap portion 61b has an opening 61h at the other end (lower end) in the axial direction of the cylindrical portion 61c, and is opened. The holder 60 is used in an orientation with the one end of the cylindrical portion 61c of the cap portion 61b being the upper side. The other end portion 51b (nozzle 54) of the suction tube 51 is inserted into the cap portion 61b from the opening 61h on the other end side (lower side) of the cylindrical portion 61c. With the cap portion 61b having such a configuration, in the event that water and the like enter the inside of the cap portion 61b, the water and the like naturally flows out from the opening 61h, which eliminates the possibility that the water and the like accumulate inside. Since the cap portion 61b includes the lid portion 61d, if water and the like having entered the machine body 11 are splashed on the cap portion 61b, the water and the like is less likely to enter the inside of the cap portion 61b. Thus, the holder 60 can inhibit the water and the like from splashing onto the other end portion 51b (nozzle 54) inserted into the cap portion 61b. Further, since the holder 60 holds the suction tube 51 in the state in which the end of the other end portion 51b faces upward, the fuel in the suction tube 51 can be inhibited from leaking to the outside. In the present embodiment, the configuration in which the cap portion 61b has a cylindrical shape is described; however, the shape of the cap portion 61b is not limited thereto, and may be, for example, a cylindrical shape having a polygonal section or a cylindrical shape having an elliptical section.

### [Lock mechanism]

As illustrated in FIGS. 8 to 10, the holder 60 includes the lock mechanism 64. The lock mechanism 64 is a mechanism that restricts the displacement (pivoting) of the second member 62 located at the first position P1 to the second position P2. The lock mechanism 64 allows the displacement (pivoting) of the second member 62 located toward the second position P2 from the first position P1. The lock mechanism 64 includes a guide portion 61e and a guide hole 61f that are provided in the first member 61, a guide groove 62d provided in the second member 62, and a bracket 65, a lock pin 66, and a coil spring 67 that are additionally provided to the second member 62.

The bracket 65 supports the lock pin 66 so as to be displaceable in the left-right direction. In other words, the lock pin 66 is supported by the bracket 65 so as to be displaceable in the left-right direction. The lock pin 66 is provided with a flange portion 68 in an intermediate section supported by the bracket 65 (see FIG. 10). The flange portion 68 is formed of a disk-shaped member (e.g., washer) extending in a radial direction of the lock pin 66. The coil spring 67 is provided between the bracket 65 and the flange portion 68 in a state in which the coil spring 67 is shortened from the steady length. When the coil spring 67 attempts to expand between the bracket 65 and the flange portion 68, the lock pin 66 is subjected to a spring force from the coil spring 67 accordingly. The lock pin 66 is constantly subjected to a spring force causing rightward displacement from the coil spring 67.

While the second member 62 (locking portion 62b) is located on (pivoted to) the second position P2 side from the first position P1, an end portion 66a of the lock pin 66 is in contact with the guide portion 61e of the first member 61. At this time, the end portion 66a is pressed against the guide portion 61e by the above spring force. While the second member 62 (locking portion 62b) is pivoted in a direction approaching the first position P1, the lock pin 66 maintains the state in which the end portion 66a is in contact with the guide portion 61e. Thus, when the second member 62 (locking portion 62b) is pivoted in the direction approaching the first position P1, the lock pin 66 is displaced leftward along the inclination of the guide portion 61e.

In the holder 60, when the second member 62 (locking portion 62b) is located at the first position P1, the position of the end portion 66a of the lock pin 66 and the position of the guide hole 61f of the first member 61 substantially coincide with each other as viewed in the left-right direction. The end portion 66a has an outer diameter allowing the insertion into the guide hole 61f.

When the second member 62 (locking portion 62b) is located at the first position P1, the lock pin 66 is urged by the coil spring 67 and displaced rightward, and the end portion 66a is inserted into the guide hole 61f. The end portion 66a is inserted into the guide hole 61f, so that the second member 62 is subjected to the restriction on the displacement around the shaft member 63. As a result, the second member 62 (locking portion 62b) is subjected to the restriction on the displacement to the second position P2, and held at the first position P1.

When a user displaces the lock pin 66 leftward against the spring force of the coil spring 67 in the state in which the second member 62 (locking portion 62b) is located at the first position P1, the end portion 66a of the lock pin 66 is pulled out from the guide hole 61f. At this time, the restriction on the displacement around the shaft member 63 is lifted in the second member 62 (locking portion 62b). In other words, the user can release the lock mechanism 64 by displacing the lock pin 66 leftward in the state in which the second member 62 (locking portion 62b) is located at the first position P1.

### [Held condition of oil feed tube by holder]

As illustrated in FIGS. 9 and 10, in the work machine 10 of the present disclosure, while the other end portion 51b (nozzle 54) of the suction tube 51 is removed from the holder 60, the second member 62 (locking portion 62b) of the holder 60 is located at the second position P2. In the work machine 10 of the present disclosure, in this state, the user inserts the other end portion 51b (nozzle 54) into the cap portion 61b from below the cap portion 61b through the opening 61h. Next, the user pivots the second member 62 (locking portion 62b) from the second position P2 to the first position P1. When the second member 62 (locking portion 62b) is pivoted to the first position P1, the recessed portion 62c gets into the position to sandwich the small diameter portion 56 from the opposite sides in the radial direction, and a lower surface, of a portion with a larger diameter than the small diameter portion 56, on the end side farther than the small diameter portion 56 in the nozzle 54 is placed on the recessed portion 62c. As a result, the other end portion 51b (nozzle 54) of the suction tube 51 is locked by the locking portion 62b. When the second member 62 (locking portion 62b) is pivoted to the first position P1, the lock mechanism 64 operates to restrict the displacement around the shaft member 63. As a result, the other end portion 51b (nozzle 54) is held by the locking portion 62b of the holder 60.

In the work machine 10 of the present disclosure, when the other end portion 51b (nozzle 54) of the suction tube 51 is removed from the holder 60, the user first displaces the lock pin 66 leftward along the guide groove 62d. At this time, the end portion 66a of the lock pin 66 is drawn from the guide hole 61f, thereby releasing the lock mechanism 64. Next, the user pivots the second member 62 from the first position P1 to the second position P2. At this time, in the other end portion 51b (nozzle 54), the small diameter portion 56 is drawn from the recessed portion 62c to unlock the locking portion 62b. As a result, the other end portion 51b (nozzle 54) is brought into a state capable of being drawn downward from the holder 60 (cap portion 61b). In this state, the user pulls the other end portion 51b (nozzle 54) downward from the holder 60 (cap portion 61b), so that the other end portion 51b (nozzle 54) can be taken out. The configuration of the holder 60 is not limited to the above described configuration, and may be any configuration as long as the holder 60 includes the cap portion 61b into which the other end portion 51b of the suction tube 51 is inserted with the end of the other end portion 51b facing upward, and the holder 60 can hold the other end portion 51b of the suction tube 51 inserted into the cap portion 61b. For example, the configuration may be such that the other end portion 51b is held with a frictional force acting between the nozzle 54 and the other end portion 51b of the suction tube 51 by pushing the other end portion 51b into the cap portion 61b. Further, the configuration may be what is called a coupler structure (quick joint structure) in which a part of the nozzle 54 engages with an engagement portion provided in the cap portion 61b by pushing the other end portion 51b of the suction tube 51 into the cap portion 61b.

### [Held condition of other end portion]

As illustrated in FIG. 7, in the work machine 10 of the present embodiment, in the other end portion 51b (nozzle 54) in the state of being held by the holder 60, a position L2 of a lower end of the suction holes 55 is located higher than a position L1 of an upper end (specifically, an upper end of the oil filling port Tb) of the fuel tank T. The position L1 of the upper end of the fuel tank T is a position corresponding to a liquid level of the fuel in the fuel tank T when the fuel tank T is fed with fuel up to the maximum capacity. Thus, the work machine 10 of the present embodiment can inhibit the fuel stored in the fuel tank T from flowing out to the other end portion 51b (nozzle 54) through the suction tube 51 and flowing out to the outside.

### [Held condition of hose]

As illustrated in FIGS. 6 and 7, the work machine 10 of the present embodiment further includes a plurality of oil feed tube holding portions 75 provided on an upper portion of the fuel tank T. In the work machine 10 of the present embodiment, the oil feed tube holding portions 75 are made of round steel bent in a substantially U shape. The suction tube 51 (hose 53) in the oil feed tube 50 is spirally wound around the axis extending in the up-down direction in the upper portion of the fuel tank T, and is held on the upper portion of the fuel tank T by being sequentially fitted onto the oil feed tube holding portions 75 along the winding direction. In the work machine 10 of the present embodiment, the suction tube 51 (hose 53) held by the plurality of oil feed tube holding portions 75 is located below the holder 60. Thus, the work machine 10 of the present embodiment can inhibit the fuel in the suction tube 51 from flowing out to the outside from the other end portion 51b (nozzle 54). Further, the work machine 10 of the present embodiment can allow the suction tube 51 to be housed inside the machine body 11 with the use of a small space between the cover 40 (second cover 40B, see FIG. 3) and the fuel tank T, by including the plurality of oil feed tube holding portions 75.

### [Installation position of holder]

As illustrated in FIGS. 4 to 7, the work machine 10 of the present embodiment includes, in the inside of the machine body 11, an inner cover 70 for protecting equipment in the machine body 11. The inner cover 70 is a member that further covers the devices arranged inside the cover 40. The inner cover 70 is configured to be removable from the machine body 11. The inner cover 70 is attached to the machine body 11 using fixing members (e.g., bolts), and is configured to be attachable to and detachable from the machine body 11 by attaching and detaching the fixing members. Thus, the inner cover 70 is configured to be removable at the time of inspections of the devices arranged inside the inner cover 70.

In the work machine 10 of the present embodiment, the first member 61 of the holder 60 is fixed to the inner cover 70. Thus, the holder 60 is configured to be attachable to and detachable from the machine body 11 by attaching and detaching the inner cover 70. The work machine 10 having such a configuration enables the holder 60 to be removed easily from the machine body 11. Thus, when dirt or the like adheres to the holder 60, for example, the holder 60 can be removed from the machine body 11 and cleaned. The work machine 10 of the present embodiment can keep the cleanliness of the holder 60 and the other end portion 51b (nozzle 54) of the suction tube 51. In the present embodiment, the configuration in which the holder 60 is fixed to the inner cover 70 has been described; however, the present invention is not limited thereto, and, for example, the holder 60 may be fixed to a frame or the like of the machine body 11 or may be detachably attached to the frame.

The embodiments are illustrative in all respects and are not restrictive. The scope of the present invention is defined not by the embodiments but by the claims, and includes all modifications within the scope equivalent to the configuration described in the claims.

### REFERENCE SIGNS LIST

- .10: work machine
- 11: machine body
- 40: cover
- 45: oil feed pump
- 50: oil feed tube
- 51: suction tube
- 51a: one end portion
- 51b: other end portion
- 51c: end face of other end portion
- 53: hose
- 54: nozzle
- 55: suction hole
- 60: holder
- 61b: cap portion
- 61h: opening
- 62b: locking portion
- 64: lock mechanism
- 70: inner cover
- 75: oil feed tube holding portion
- E: engine (prime mover)
- T: fuel tank (tank)
- P1: first position
- P2: second position
- L1: position of upper end of fuel tank
- L2: position of suction hole

## Claims

1. A work machine comprising a machine body on which a prime mover, a tank that stores fuel for the prime mover, and a pump that delivers the fuel to the tank are mounted, the machine body being covered with a cover, wherein
the machine body includes, on an inner side with respect to the cover,
an oil feed tube a part of which includes a hose, the oil feed tube having one end portion connected to a suction aperture of the pump, and
a holder that holds an other end portion of the oil feed tube in an orientation in which an end of the other end portion faces upward,
the holder includes a cap portion having an opening on a lower side and an upper side being closed, and
the oil feed tube is held by the holder in a state in which the other end portion is inserted into the cap portion from the opening.

2. The work machine according to claim 1, wherein
the oil feed tube includes a nozzle that constitutes the other end portion, and
the holder holds the nozzle.

3. The work machine according to claim 2, wherein the holder holds the nozzle in a state in which a suction hole for the fuel with which the nozzle is provided is located higher than a liquid level of the fuel in the tank when the tank is fed with fuel up to a maximum capacity.

4. The work machine according to claim 2 or 3, wherein
the holder further includes a locking portion that locks the nozzle, and
the locking portion is configured to be displaceable between a first position at which the nozzle in a state of being inserted into the cap portion is locked, and a second position at which the nozzle in the state of being inserted into the cap portion is unlocked.

5. The work machine according to claim 4, wherein the holder further includes a lock mechanism that restricts a displacement of the locking portion located at the first position to the second position.

6. The work machine according to any one of claims 1 to 5, wherein the holder is detachably attached to the machine body, or is attached to a member detachably attached to the machine body.

7. The work machine according to any one of claims 1 to 6, wherein the machine body further includes, on the inner side with respect to the cover, an oil feed tube holding portion that holds, below the holder, an intermediate portion in a length direction of the oil feed tube.

8. The work machine according to claim 7, wherein the oil feed tube holding portion holds the oil feed tube that is spirally wound.

9. The work machine according to any one of claims 1 to 8, wherein the cap portion has an opening on a lower side, and has a cylindrical shape with a side surface and an upper side being closed.
